Europäisches Patentamt

**European Patent Office**

**Office européen des brevets**

(11) Veröffentlichungsnummer: **0 301 415**
A2

## (12) EUROPÄISCHE PATENTANMELDUNG

(21) Anmeldenummer: 88111772.5

(22) Anmeldetag: 21.07.88

(51) Int. Cl.⁴: **B32B 27/20 , B32B 27/32**

(30) Priorität: 28.07.87 DE 8710305 U

(43) Veröffentlichungstag der Anmeldung:
01.02.89 Patentblatt 89/05

(84) Benannte Vertragsstaaten:
BE DE ES FR GB IT NL

(71) Anmelder: HOECHST AKTIENGESELLSCHAFT
Postfach 80 03 20
D-6230 Frankfurt am Main 80(DE)

(72) Erfinder: Schlögl, Gunter, Dr.
Finkenweg 2
D-6233 Kelkheim(DE)
Erfinder: Bothe, Lothar, Dr.
Am Heiligenhaus 9
D-6500 Mainz-Gonsenheim(DE)

(54) Schichtstoffzusammensetzung zum Überziehen von Flächengebilden.

(57) Es wird eine Schichtstoffzusammensetzung aus thermoplastischem Kunststoff beschrieben, die eine Trägerschicht, zwei beidseitig darauf angeordnete Deckschichten sowie auf den Deckschichten angeordnete weitere funktionelle Schichten umfaßt. Die Kennzeichenmerkmale bestehen darin,

- daß die Trägerschicht aus einer opaken, biaxial orientierten Polypropylenfolie mit Füllstoffen besteht,
- daß die Deckschichten biaxial orientierte polyolefinische Deckschichten sind und
- daß auf einer Außenseite der Schichtstoffzusammensetzung eine Releaseschicht und auf der anderen eine Kleberschicht angeordnet ist.

EP 0 301 415 A2

## Schichtstoffzusammensetzung zum Überziehen von Flächengebilden

Die Erfindung betrifft eine Schichtstoffzusammensetzung aus thermoplastischem Kunststoff, umfassend eine Trägerschicht, zwei beidseitig darauf angeordnete Deckschichten sowie auf den Deckschichten angeordnete weitere funktionelle Schichten.

Flächengebilde, insbesondere mehr oder weniger gekrümmte Oberflächen von rotationssymmetrischen Hohlkörpern, z.B. Behältnissen wie Dosen oder Flaschen, werden üblicherweise vollflächig oder partiell mit Überzügen wie Aufdrucken, Papieretiketten oder Überzügen aus Kunststoff versehen. Die Überzüge dienen dabei gleichermaßen der Kennzeichnung des Behältnisinhaltes, aber auch der Abschirmung, z.B. dem Schutz des Inhaltes vor Wärmestrahlung oder Lichteinwirkung, und schließlich auch der Verbesserung der Dauerbeständigkeit des Behältnisses selbst durch einen erhöhten Schutz vor äußeren Einwirkungen mechanischer und sonstiger, z.B. korrosiver Art.

Neben der Direktbedruckung der Oberflächen oder der Lackierung (DE-PS 34 35 435) haben sich in neuerer Zeit immer mehr Haftklebeetiketten bei kleinen und mittelgroßen Behältnissen für höherwertige Produkte bei mittleren bis hohen Auflagen besonders bewährt (siehe hierzu: Verpackungsrundschau (1983) S. 1190-1206). Die Vorteile der Haftklebeetiketten sind insbesondere in den hohen Variationsmöglichkeiten betreffend die freie Kombinierbarkeit der verschiedenen Ausstattungsverfahren zu sehen, denn sie ermöglichen erstmals einen hohen Ausstattungsgrad in nur einem einzigen Arbeitsgang. Haftklebeetiketten werden stets auf einer antiadhäsiven - d.h. nicht klebefähigen - Papierunterlage angeliefert, von der sie mit Hand abgezogen oder maschinell mit Abroll- und Auftragsgeräten gelöst und auf die Substratoberfläche übertragen werden. Nachteiligerweise werden deshalb für die industrielle Massenanwendung von Haftklebeetiketten ein moderner Maschinenpark, der teils aus Spezialmaschinen bestehen muß, sowie eine breite Palette von Materialaufbauten benötigt.

Man hat daher an Verfahren gearbeitet, nach denen schlauchförmige Materialien direkt auf die Substratoberflächen aufgeschrumpft werden (The 1985 Packaging Enzyclopedia, S. 134) oder bei denen Material direkt von der Rolle verarbeitet werden kann.

Die EP-A-0 208 261 gibt beispielsweise ein Verfahren an, bei dem ein mit einem hitzeaktivierbaren Kleber beschichtetes Blattmaterial um einen Hohlkörper gelegt wird, dort festgehalten und dann einer Wärmebehandlung unterzogen wird.

Die Aufgabe der vorliegenden Erfindung bestand darin, ein Überzugsmaterial für gekrümmte Oberflächen von Hohlkörpern zur Verfügung zu stellen, das maschinell direkt von der Rolle verarbeitet werden kann, ohne dabei als Abfallmaterial antiadhäsiv beschichtete Papiere anfallen zu lassen, und das gleichzeitig mit diesem Vorteil einer nachträglichen Wärmebehandlung nicht bedarf.

Gelöst wird diese Aufgabe durch eine Schichtstoffzusammensetzung der eingangs genannten Gattung, deren Kennzeichenmerkmale darin zu sehen sind,

- daß die Trägerschicht aus einer opaken, biaxial orientierten Polypropylenfolie mit Füllstoffen besteht,
- daß die Deckschichten biaxial orientierte polyolefinische Deckschichten sind und
- daß auf einer Außenseite der Schichtstoffzusammensetzung eine Releaseschicht und auf der anderen eine Kleberschicht angeordnet ist.

Erfindungsgemäß besteht die Trägerschicht aus Polypropylen, wobei die Menge an Füllstoff 5 bis 25 Gew.-% beträgt, bezogen auf das Gesamtgewicht der Trägerschicht, der eingesetzte Füllstoff eine Teilchengröße von 2 bis 5 $\mu$m hat und die Schicht um das 5- bis 7fache längsgestreckt und um das 8- bis 10fache quergestreckt worden ist und eine Dichte von maximal 0,9 g/cm$^3$ aufweist.

Als bevorzugtes Polypropylen wird ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mindestens 140°C, bevorzugt von wenigstens 150°C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für das bevorzugte Polypropylen dar.

Das bevorzugte Polypropylen besitzt einen Schmelzflußindex im Bereich von 0,5 g/10 min bis 8 g/10 min bei 230°C und 2,16 kp Belastung (DIN 53 735), insbesondere von 1,5 g/10 min bis 4 g/10 min.

Bei den Füllstoffen handelt es sich um anorganische oder organische, mit Polypropylen unverträgliche, pulverförmige Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Geeignete organische Füllstoffe sind beispielsweise Partikel aus Polymeren wie Polymethylmethacrylat, Polyethylacrylat oder Polyethylen, aus Polyamiden oder aus Polymeren auf Basis von Polyestern. Die Füllstoffmenge beträgt erfindungsgemäß 5 bis 25 Gew.-%, vorzugsweise 10 bis 20 Gew.-%, bezogen auf das Gesamtgewicht der Trägerschicht, bestehend aus Polypropylen plus Füllstoffen. Die (mittlere) Teilchengröße des pulverförmigen Füllstoffes liegt erfindungsgemäß im Bereich von 2 bis 5 μm, vorzugsweise im Bereich von 3 bis 4 μm. Die Trägerschicht kann zusätzlich auch zweckmässige Additive wie Antioxidantien, Antistatika, Farbstoffe und/oder Stabilisatoren in einer jeweils wirksamen Menge enthalten.

Die auf der Trägerschicht beidseitig angeordneten Deckschichten bestehen ebenfalls aus Polyolefinen, wobei insbesondere die gleichen Polyolefine eingesetzt werden, die auch für die Trägerschicht Verwendung finden, jedoch ohne den Zusatz an Füllstoffen. Die Deckschichten sind wie die Trägerschicht biaxial streckorientiert und die gesamte Schichtstruktur aus Trägerschicht und Deckschichten wird bevorzugt nach dem Coextrusionsverfahren hergestellt. Dabei werden die Schmelzen der die Schicht(en) bildenden Polymeren durch eine Flachdüse oder Runddüse coextrudiert, die durch Coextrusion erhaltene Schichtstruktur durch Abkühlen verfestigt, anschließend bei einer Temperatur von 120 bis 130 °C im Verhältnis von 5 bis 7 : 1 längsstreckt und bei einer Temperatur von 160 bis 170 °C im Verhältnis von 8 bis 10 : 1 querstreckt und die biaxial gestreckte Schichtstruktur thermofixiert.

Auf einer Deckschicht der erfindungsgemäßen Schichtstoffzusammensetzung, insbesondere auf der die Releaseschicht tragenden Deckschicht, ist vorzugsweise eine Bedruckung angeordnet, besonders bevorzugt eine Mehrfarbenbedruckung. Die Bedruckung hat erfindungsgemäß sowohl informativen wie dekorativen Charakter, und sie kann auch dazu dienen, die Gesamtlichtdurchlässigkeit der Schichtstoffzusammensetzung zu verringern.

Als Abschlußschicht ist auf der Bedruckung eine Releaseschicht angeordnet. Unter einer Releaseschicht ist insbesondere ein antiadhäsiver Lack zu verstehen, in der Praxis haben sich hierzu insbesondere Lacke auf Basis vernetzter Polydialkylsiloxane als geeignet erwiesen.

Auf der nicht mit der Bedruckung und der Releaseschicht überzogenen, anderen Deckschicht der neuerungsgemäßen Schichtstoffzusammensetzungen ist eine Haftkleberschicht angeordnet. Die Haftkleberschicht kann vollflächig auf der Deckschicht angeordnet sein oder nur partiell, z.B. nur in den randnahen Bereichen der Schichtstoffzusammensetzung. Als Haftkleber haben sich sogenannte druckempfindliche Haftkleber als besonders geeignet erwiesen, insbesondere solche auf Basis von natürlichem oder synthetischem Kautschuk, von Copolymeren aus Ethylen und Vinylazetat, von Polyacryl- oder Polymethacrylsäureester oder auf Basis von Polyvinylethern.

Die mit der Releaseschicht überzogene Deckschicht besteht in einer besonders bevorzugten Ausführungsform aus isotaktischem Propylenhomopolymer, wobei die Dicke dieser Deckschicht wenigstens 1 μm, besonders bevorzugt 1,5 bis 2,5 μm, beträgt. Bei einer Dicke der Deckschicht innerhalb dieses speziell ausgewählten Bereiches weist die Schichtstoffzusammensetzung einen sehr guten Oberflächenglanz auf. Die andere Deckschicht, die mit dem Kleber beschichtet ist, kann ebenfalls aus Propylenhomopolymer bestehen, in bevorzugter Ausführungsform besteht sie jedoch aus einem Ethylen-Propylen-Copolymeren mit einem Ethylenanteil von 2 bis 6 Gew.-%, bevorzugt von 2,5 bis 4,5 Gew.-%, und sie besitzt eine Dicke von kleiner als 1,5 μm, bevorzugt zwischen 0,5 bis 1 μm. Die Trägerschicht besitzt eine Dicke von 20 bis 120 μm, bevorzugt von 40 bis 80 μm.

Um die Haftung sowohl der Bedruckung als auch des Haftklebers an den jeweiligen Deckschichten zu verbessern, hat es sich als besonders geeignet erwiesen, die Deckschichten vor dem Aufbringen der Bedruckung bzw. des Haftklebers, aber nach der Hitzefixierung, einer Coronasprühentladung auszusetzen. Durch die Coronabehandlung wird auf die Oberfläche der Deckschichten ein Polarisationseffekt ausgeübt, durch den bewirkt wird, daß die Oberflächen besser benetzbar werden. Durch Einblasen eines Aerosols, das aus einer wäßrigen Lösung eines ionischen Antistatikums mittels piezoelektrischer Schwingkörper erzeugt wurde, in den Coronabehandlungsraum wird weiterhin eine besonders gute Antistatik des Schichtstoffkörpers bewirkt. Auf diese Art wird in der Praxis erreicht, daß die Deckschichten einen elektrischen Oberflächenwiderstand von weniger als $10^9$ Ohm aufweisen.

Es hat sich überraschend gezeigt, daß sich mit der erfindungsgemäßen Schichtstoffzusammensetzung die Außenflächen rotationssymmetrischer Hohlkörper, insbesondere von Behältnissen wie Dosen, Gläsern oder Flaschen, ohne Überlappungsnaht hervorragend überziehen lassen. Eine Wärmenachbehandlung ist nicht erforderlich. Die erfindungsgemäße Schichtstoffzusammensetzung haftet als Überzug extrem gut und durch den speziellen Schichtaufbau wird erreicht, daß den Überzügen ein besonders dekorativer Glanzeffekt verliehen wird.

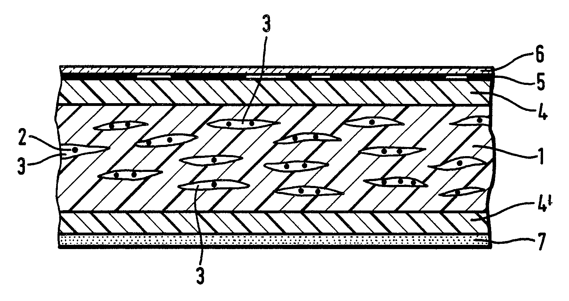

Die Erfindung wird nachfolgend anhand der Zeichnung beispielhaft noch näher erläutert, die einen senkrechten Schnitt durch eine erfindungsgemäße Schichtstoffzusammensetzung in seitlicher Ansicht zeigt.

Durch Bezugsziffern ist die Trägerschicht 1 hervorgehoben, in der einige Füllstoffpartikel 2 erkennbar sind, die während der Streckorientierung der Schichtstoffzusammensetzung bewirken, daß die Kunststoffmatrix der Trägerschicht 1 aufreißt und dadurch Mikrorisse und unregelmäßige Vakuolen 3 bildet. Beidseitig auf der Trägerschicht 1 sind die Deckschichten 4/4′ angeordnet. Auf einer Deckschicht 4 ist die Bedruckung 5 und eine Releaseschicht 6 aus vernetztem Polydimethlysiloxanlack erkennbar. Auf einer anderen Deckschicht 4′ ist die Klebeschicht 7 angeordnet, die in der Zeichnung vollflächig dargestellt ist.

**Ansprüche**

1. Schichtstoffzusammensetzung aus thermoplastischem Kunststoff, umfassend eine Trägerschicht, zwei beidseitig darauf angeordnete Deckschichten sowie auf den Deckschichten angeordnete weitere funktionelle Schichten, dadurch gekennzeichnet,

- daß die Trägerschicht aus einer opaken, biaxial orientierten Polypropylenfolie mit Füllstoffen besteht,
- daß die Deckschichten biaxial orientierte polyolefinische Deckschichten sind und
- daß auf einer Außenseite der Schichtstoffzusammensetzung eine Releaseschicht und auf der anderen eine Kleberschicht angeordnet ist.

2. Schichtstoffzusammensetzung nach Anspruch 1, dadurch gekennzeichnet, daß die Menge an Füllstoff in der Trägerschicht 5 bis 25 Gew.-% beträgt, bezogen auf das Gesamtgewicht der Trägerschicht, der eingesetzte Füllstoff eine Teilchengröße von 2 bis 5 $\mu$m hat und die Schicht um das 5- bis 7fache längsgestreckt und um das 8- bis 10fache quergestreckt ist und eine Dichte von maximal 0,9 g/cm$^3$ aufweist.

3. Schichtstoffzusammensetzung nach Anspruch 1 oder 2, dadurch gekennzeichnet, daß als Polypropylen ein iso taktisches Propylenhomopolymeres eingesetzt wird oder ein Copolymeres, das zum überwiegenden Anteil aus Propyleneinheiten zusammengesetzt ist.

4. Schichtstoffzusammensetzung nach einem der Ansprüche 1 bis 3, dadurch gekennzeichnet, daß als Füllstoffe anorganische oder organische, mit Polypropylen unverträgliche, pulverförmige Materialien eingesetzt werden, bevorzugt anorganische Füllstoffe wie Calciumcarbonat, Siliciumdioxid, Titandioxid oder Mischungen von diesen.

5. Schichtstoffzusammensetzung nach einem der Ansprüche 1 bis 4, dadurch gekennzeichnet, daß die Deckschichten aus Polyolefinen ohne Zusatz an Füllstoffen bestehen, wobei insbesondere die gleichen Polyolefine eingesetzt werden, die auch für die Trägerschicht Verwendung finden.

6. Schichtstoffzusammensetzung nach einem der Ansprüche 1 bis 5, dadurch gekennzeichnet, daß die Trägerschicht und die Deckschichten coextrudiert sind.

7. Schichtstoffzusammensetzung nach einem der Ansprüche 1 bis 6, dadurch gekennzeichnet, daß auf einer Deckschicht der Schichtstoffzusammensetzung eine Bedruckung angeordnet ist.

8. Schichtstoffzusammensetzung nach einem der Ansprüche 1 bis 7, dadurch gekennzeichnet, daß auf der Bedruckung eine Releaseschicht auf Basis eines Lackes aus vernetztem Polydialkylsiloxan angeordnet ist.

9. Schichtstoffzusammensetzung nach einem der Ansprüche 1 bis 8, dadurch gekennzeichnet, daß auf der nicht mit der Bedruckung und der Releaseschicht überzogenen, anderen Deckschicht der Schichtstoffzusammensetzung eine Haftkleberschicht angeordnet ist.

10. Schichtstoffzusammensetzung nach einem der Ansprüche 1 bis 9, dadurch gekennzeichnet, daß die Haftkleberschicht partiell in den randnahen Bereichen der Schichtstoffzusammensetzung angeordnet ist.

11. Schichtstoffzusammensetzung nach einem der Ansprüche 1 bis 10, dadurch gekennzeichnet, daß die mit der Bedruckung und der Releaseschicht überzogene Deckschicht aus Propylenhomopolymerisat besteht und daß die mit der Kleberschicht überzogene Deckschicht aus einem Ethylen-Propylen-Copolymerisat besteht.

12. Schichtstoffzusammensetzung nach einem der Ansprüche 1 bis 11, dadurch gekennzeichnet, daß die mit der Bedruckung und der Releaseschicht überzogene Deckschicht eine Dicke von wenigstens 1 $\mu$m aufweist, bevorzugt von 1,5 bis 2,5 $\mu$m, und daß die mit der Kleberschicht überzogene Deckschicht eine Dicke von kleiner/gleich 1,5 $\mu$m, bevorzugt 0,5 bis 1 $\mu$m aufweist.

13. Schichtstoffzusammensetzung nach einem der Ansprüche 1 bis 12, dadurch gekennzeichnet, daß die Trägerschicht eine Dicke im Bereich von 20 bis 100 $\mu$m, bevorzugt im Bereich von 40 bis 80 $\mu$m, besitzt.

87/K 043
HOECHST AKTIENGESELLSCHAFT